# EUROPEAN PATENT APPLICATION

(11) **EP 2 984 949 A1**
(43) Date of publication of application: **17.02.2016**
(21) Application number: 13881716.8
(22) Date of filing: 07.04.2013
(51) Int. Cl.: A24F 47/00

(54) **ELECTRONIC CIGARETTE CASE AND SUPPORT STRUCTURE THEREOF**

(71) Applicant: KIMREE HI-TECH INC., Road Town, Tortola (VG)
(72) Inventor: LIU, Qiuming, Huizhou Guangdong 516000 (CN)
(74) Representative: Beetz & Partner mbB
(86) International application number: PCT/CN2013/073823
(87) International publication number: WO 2014/166033

(57) **Abstract**

An electronic cigarette case (100) and a support structure accommodated in a housing of the cigarette case. The electronic cigarette case comprises a case body (1) and a cover body (2). The cover body is movably connected to the case body. The cover body is opened or closed under the effect of an external acting force. A support is accommodated in the case body. The support comprises a primary support (3) and a secondary support (41). The primary support at least comprises a battery chamber (31), a battery support (32), and at least one battery rod accommodating chamber (36). The battery chamber has a first battery (311) inside. The battery support is provided with a first positive electrode (321) and a first negative electrode (322) thereon. One ends of the first positive electrode and the first negative electrode are correspondingly connected electrically to a battery positive electrode and a battery negative electrode of the first battery. When an external battery rod (6) is inserted in the battery rod accommodating chamber, a second positive electrode and a second negative electrode of a second battery in the battery rod are separately connected to the first negative electrode and the first positive electrode in an abutting mode to form a connected circuit loop with the first battery, so that the first battery charges the second battery. The cigarette case of the present invention can charge the second battery in the battery rod by using the first battery, and is easy in use and convenient in carry.

## Description

### FIELD OF THE INVENTION

The present invention relates to electronic cigarettes, especially relates to an electronic cigarette case and a support mechanism thereof.

### BACKGROUND OF THE INVENTION

Conventional electronic cigarette case usually includes a case body and a cover body. The cover body and the case body are two separate components. The cover body and the case body are open or closed by the way of being mutually sheathed. Furthermore, the electronic cigarette case of conventional technology is only used for placing electronic cigarettes or related components of the electronic cigarette such as an atomizer or a battery rod, not be able to charge the battery rod when users go out or it is without electricity, which may cause great inconvenience to smokers.

### SUMMARY OF THE INVENTION

A main objective of the present invention is to provide an electronic cigarette case, which is capable of using a first battery disposed in a case body to charge a second battery in a battery rod thereof, and which is easy to use, and convenient to carry.

To achieve the aforementioned objective, the present invention provides an electronic cigarette case. The electronic cigarette case includes a case body and a cover body. The cover body is actively connected to the case body, achieving the cover body opening or closing by action of external force. The case body accommodates a support therein. The support includes a main support and an auxiliary support. The main support at least includes a battery chamber, an electrode support and at least a battery rod accommodating chamber. The battery chamber loads a first battery. The electrode support disposes a first positive electrode and a first negative electrode. One end of the first positive electrode and one end of the first negative electrode are electrically connected to a corresponding battery anode and a battery cathode of the first battery respectively. When an external battery rod inserts into the battery rod accommodating chamber, a second positive electrode and a second negative electrode of a second battery in the battery rod are respectively abuts to the first negative electrode and the second positive electrode to form a conductive circuit loop with the first battery, thus makes the first battery charging the second battery.

Furthermore, one end of the battery rod accommodating chamber near to the electrode support disposes a locking member, the locking member is a hollow structure, the external battery rod successively inserts into the battery rod accommodating chamber and the locking member and then is tightened by the locking member.

Furthermore, the locking member is made of silicone material.

Furthermore, the first battery is a rechargeable battery.

Furthermore, the electronic cigarette case comprises a printed circuit board. The printed circuit board is fixed on the main support by screwing or clamping. The first battery is loaded in the battery chamber and is fixed on the printed circuit board by welding or sticking. The printed circuit board disposes a positive terminal and a negative terminal. The battery anode and the battery cathode electrically connect with the positive terminal and the negative terminal respectively; and, the positive terminal and the negative terminal electrically connect with the first positive electrode and the first negative electrode respectively.

Furthermore, the printed circuit board disposes a charging interface thereon. An anode and a cathode of the charging interface electrically connect with the negative terminal and the positive terminal respectively. External power supplies power to the first battery by the charging interface.

Furthermore, the printed circuit board disposes an output interface thereon. An anode and a cathode of the output interface electrically connect with the negative terminal and the positive terminal respectively. The first battery supplies power to external devices by the output interface.

Furthermore, both the charging interface and the output interface are USB interface.

Furthermore, the cover body is rotatably fixed on the case body by a revolving shaft.

Furthermore, the electronic cigarette case includes a semi-automatic flip mechanism. The semi-automatic flip mechanism comprises a cam, a slider and a damping element. The auxiliary support defines a receiving chamber. Both the slider and the damping element are accommodated in the receiving chamber. A fixing end of the cam is rotatably fixed on the main support, and a free end of the cam is latched in the cover body. The slider is connected between the cam and the damping element. The auxiliary support locates at one side of the main support and near to a sidewall of the electronic cigarette case.

Furthermore, one end of the damping element abuts to a bottom of the slider, and the other end abuts to a bottom wall of the auxiliary support. The fixing end of the cam is rotatably fixed on the main support, and a surface of the slider near the fixed end of the cam disposes a first bump. The fixed end of the cam maintains point contacting with the first bump at any time.

Furthermore, the cover body is further fixed with a baffle. The baffle is parallel with a sidewall of the cover body and spaced with the sidewall by a certain distance. The free end of the cam extends inbetween the baffle and the sidewall, and is limited by the baffle and the sidewall respectively. External force exerts on the cover body and drives the cam rotating by the baffle or the sidewall, then drives the slider and the damping element doing linear reciprocating movement in the receiving chamber.

Furthermore, the first bump is a trapezoidal structure or a semicircular structure.

Furthermore, the slider and the first bump is integrally formed.

Furthermore, the damping element is a compression spring.

Furthermore, the slider has a first guiding rail and a second guiding rail oppositely and in parallel disposed. The first guiding rail and the second guiding rail run through the compression spring; and a bottom of a first end of the slider away from the cam disposes a second bump. A bottom wall of the bottom of the auxiliary support disposes a third bump. The second bump and the third bump respectively abut to two ends of the compression spring from a space between the first guiding rail and the second guiding rail. The second bump is used to guide one end of the compression spring to vertically upwards corresponding to the second bump from the third bump of the bottom wall and then to arrange the other end of the compression spring.

Furthermore, the main support further includes at least one electronic cigarette accommodating chamber.

Furthermore, the main support further includes at least an atomizer accommodating chamber.

Furthermore, the main support further includes two atomizer accommodating chambers.

The electronic cigarette case of the present invention: the electronic cigarette case is convenient to carry; by inserting the battery rod into the battery rod accommodating chamber makes the second negative electrode and the second positive electrode of the second battery respectively abutting to the first positive electrode and the first negative electrode, and then conducting the circuit loop and being able to use the first battery to charge the second battery in the battery rod; pulling out or releasing the battery rod, then disconnect the conducted circuit loop and stop charging; using the ways of inserting in or pulling out to control charging or not, easy to use thereof.

The main objective of the present invention is further to provide a support mechanism accommodated in a housing of the electronic cigarette case. The support mechanism is also capable to use the first battery disposed in the case body to charge the second battery in the battery rod. It is easy to use and convenient to carry.

To achieve the aforementioned objective, the present invention provides a support mechanism accommodated in a housing of the electronic cigarette case. The support mechanism includes a main support and an auxiliary support. The main support at least includes a battery chamber, an electrode support and at least a battery accommodating chamber. The battery chamber loads a first battery. The electrode support disposes a first positive electrode and a first negative electrode. One end of the first positive electrode and the first negative electrode respectively corresponding electrically connects to a battery anode and a battery cathode of the first battery. When an external battery rod inserts into the battery rod accommodating chamber, a second positive electrode and a second negative electrode of a second battery in the battery rod respectively abuts to the first negative electrode and the second positive electrode to form a conductive circuit loop with the first battery, then makes the first battery charging the second battery.

Furthermore, one end of the battery rod accommodating chamber near to the electrode support disposes a locking member. The locking member is a hollow structure. The external battery rod successively inserts into the battery rod accommodating chamber and the locking member and then is tightened by the locking member. The locking member is made of silicone material.

Furthermore, the first battery is a rechargeable battery. The electronic cigarette case comprises a printed circuit board. The printed circuit board is fixed on the main support by screwing or clamping. The first battery is loaded in the battery chamber and is fixed on the printed circuit board by welding or sticking. The printed circuit board disposes a positive terminal and a negative terminal. The battery anode and the battery cathode electrically connect with the positive terminal and the negative terminal respectively; and the positive terminal and the negative terminal electrically connect with the first positive electrode and the first negative electrode respectively. The printed circuit board disposes a charging interface, and an anode and a cathode of the charging interface electrically connect with the negative terminal and the positive terminal respectively. External power supplies power to the first battery by the charging interface. The printed circuit board disposes an output interface. An anode and a cathode of the output interface electrically connect with the negative terminal and the positive terminal respectively. The first battery supplies power to external devices by the output interface.

The support mechanism of the present invention: by inserting the battery rod into the battery rod accommodating chamber makes the second negative electrode and the second positive electrode of the second battery respectively abutting to the first positive electrode and the first negative electrode, and then conducts the circuit loop, and it is able to use the first battery to charge the second battery in the battery rod; pulling out or releasing the battery rod, then disconnect the conducted circuit loop and stop charging; using the ways of inserting in or pulling out to control charging or not, easy to use thereof.

Embodiments of the present invention will be further described in detail in the following drawings.

### BRIEF DESCRIPTION OF THE DRAWINGS

FIG. 1 is a perspective view of an electronic cigarette case according to an embodiment of the present invention.
FIG. 2 is an exploded, isometric view of the electronic cigarette case shown in FIG. 1.
FIG. 3 is a brief perspective view of the electronic cigarette case in a closing state shown in FIG. 1.
FIG. 4 is a brief perspective view of the electronic cigarette case in a state from closing to opening shown in FIG. 1.
FIG. 5 is a brief perspective view of the electronic cigarette case in a complete opening state shown in FIG. 1

### DETAILED DESCRIPTION OF THE INVENTION

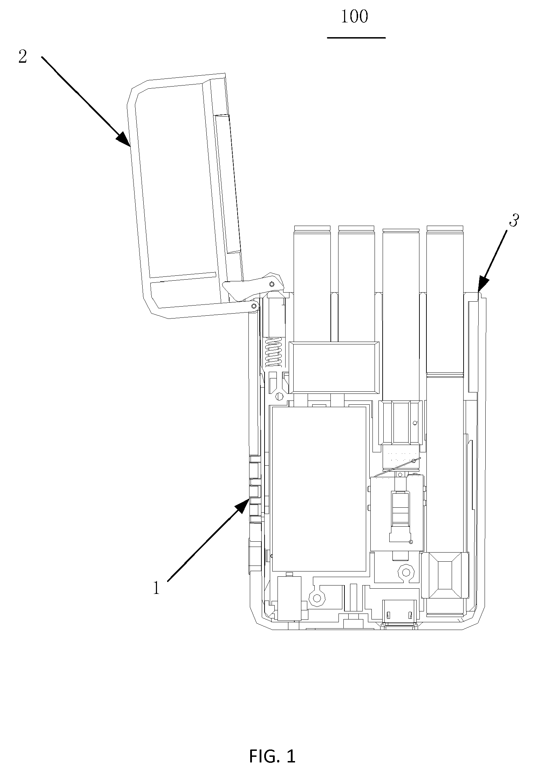

Referring to FIG. 1, an electronic cigarette case 100 of an embodiment of the present invention includes a case body 1 and a cover body 2. The cover body 2 is actively connected to the case body 1 by a first revolving shaft 23.

The case body 1 installs a support therein. The support includes a main support 3 and an auxiliary support 41, being used to store electronic cigarette components, a battery and a charging mechanism and so on. The electronic cigarette 100 also includes a flip mechanism 4 of the electronic cigarette case. It is understood that, the main support 3 and the auxiliary support 41 may be an integral structure, and also may be provided independently and then assembled.

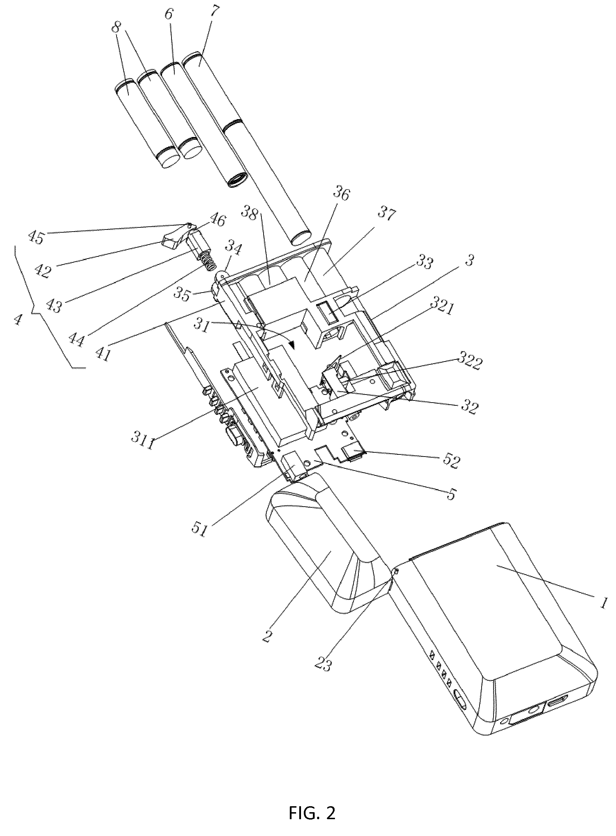

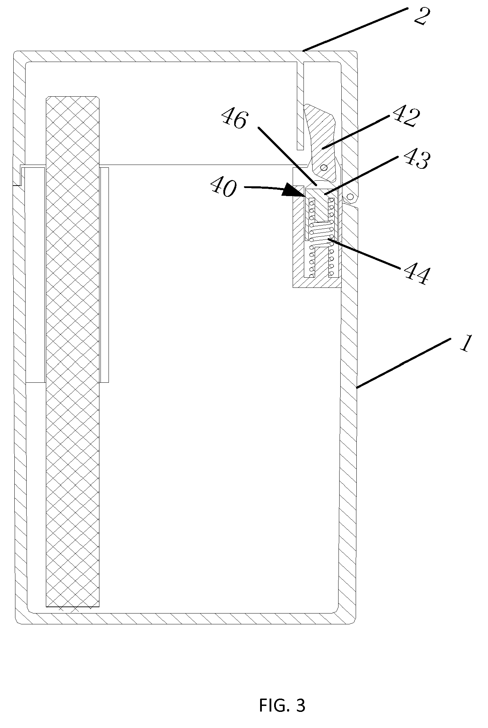

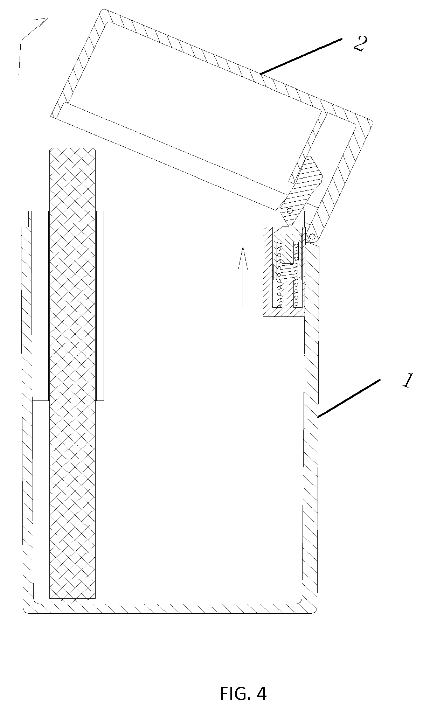

Referring to FIG. 2 to FIG. 5, the electronic cigarette case 100 further includes the semi-automatic flip mechanism 4. The flip mechanism includes a cam 42, a slider 43 and a damping element 44. In the auxiliary support 41 defines a receiving chamber 40. Both the slider 43 and the damping element 44 are accommodated in the receiving chamber 40. One end of the damping element 44 abuts to a bottom of the slider 43, and the other end abuts to a bottom wall 412 of the receiving chamber 40 in the auxiliary support 41. A fixed end of the cam 42 defines a shaft hole (not labeled). The auxiliary support 41 locates at one side of the main support 3 and is installed on a top of a sidewall of the electronic cigarette case 100. The main support 3 has a first lug 34 and a second lug 35 oppositely located at one end of an opening position on a top of the case body 1. A second revolving shaft 45 successively runs through the first lug 34, the shaft hole of the cam 42 and the second lug 35 to rotatably fix the fixed end of the cam 42 on the main support 43. And, a surface of the slider 43 adjacent to the fixed end of the cam 42 disposes a first bump 46. The fixed end of the cam 42 maintains point contacting with the first bump 46 at any time. The cover body 2 is further fixed with a baffle 24 therein. The baffle 24 is parallel with a sidewall 25 of the cover body 2 and is spaced from the sidewall 25 by a certain distance. A free end of the cam 42 extends inbetween the baffle 24 and the sidewall 25, and is limited by the baffle 24 and the sidewall 25 respectively. External force exerts on the cover body 2 and drives the cam 42 rotating by the baffle 24 or the sidewall 25, then drives the slider 43 and the damping element 44 doing linear reciprocating movement in the receiving chamber 40.

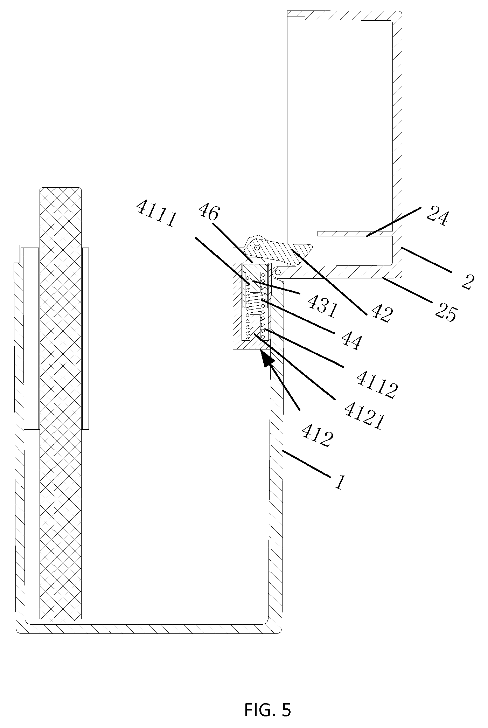

Furthermore, referring to FIG. 2 and FIG. 5, the first bump 46 is a trapezoidal structure, therefore makes the cam 42 acting with the first bump 46 during rotation and then generates downward pressure. Certainly, in other alternative embodiments, the first bump 46 also may be a semicircular structure, or may be disposed as other shape structures according to practical needs.

In the aforementioned embodiment, the slider 43 and the first bump 46 are independently designed, and are mutually fixed by way of such as screwing, welding or nesting. In other alternative embodiments, the slider 43 and the first bump 46 also may be integrally formed.

In a specific embodiment, referring to FIG. 2 and FIG.5, the damping element 44 is a compression spring. Specifically, the slider 43 may dispose a first guiding rail 4111 and a second guiding rail 4112 oppositely and in parallel disposed. The first guiding rail 4111 and the second guiding rail 4112 run through the compression spring; meanwhile, a bottom of a first end of the slider 43 away from the cam 42 disposes a second bump 431, the bottom wall 412 of a bottom of the auxiliary support 41 disposes a third bump 4121. The second bump 431 and the third bump 4121 respectively abut to two ends of the compression spring from a space the first guiding rail 4111 and the second guiding rail 4112. The second bump 431 is used to guide one end of the compression spring to vertically upwards corresponding to the second bump 431 from the third bump 312 of the bottom wall 412 and then to arrange the other end of the compression spring. Therein, by setting the first guiding rail 4111 and the second guiding rail 4112 running through the compression spring, and making the second bump 431 and the third bump 4121 abutting to the two ends of the compression spring respectively from the space between the first guiding rail 4111 and the second guiding rail 4112, may ensure that the compression spring is elastically deformed only on a predetermined route. Reliability is better and installation is more convenient. Certainly, in other alternative embodiments, the damping element 44 also may be made of rubber or other materials with high elasticity.

Referring to FIG. 2 and FIG. 5, a main working principle of opening or closing the cover body 2 is following described.
A) when opening the cover body 2 by hand, the cover body 2 drives the cam 42 rotating and compressing the spring downwardly; after reaching a certain angle, and under the action by the upward force of the compression spring and the slider 43, the cam 42 automatically rotates, and drives the cover body 2 automatically opening. Meanwhile, the cam 42 hits the cover body 2, and makes clatter sound.
B) when closing the cover body 2 by hand, the cover body 2 drives the cam 42 rotating and compressing the spring downwardly; after reaching a certain angle, and under the action by the upward rebound force of the compression spring and the slider 43, the cam 42 automatically rotates, and drives the cover body 2 automatically closing. Meanwhile, the cam 42 hits the cover body 2, and makes clatter sound.

By setting the semi-automatic flip mechanism 4, it is achieved that the cover body 2 opens or closes by external force, thus being capable to achieve semi-automatic flip operations, and increase operating fun.

Continue referring to FIG. 2, in a specific embodiment, an internal of the case body 1 accommodates the main support 3. The main support 3 is fixed in the internal of the case body 1 by a screw. Wherein, the main support 3 at least includes a battery chamber 31, an electrode support 32 and at least a battery rod accommodating chamber 36. The battery chamber 31 loads a first battery 311 therein. The electrode support 32 disposes a first positive electrode 321 and a first negative electrode 322 thereon. One end of the first positive electrode 321 and one end of the first negative electrode 322 respectively electrically connects to a corresponding battery anode (not labeled) and a battery cathode (not labeled) of the battery. When an external battery rod 6 is inserted into the battery rod accommodating chamber 36, a second positive electrode (not labeled) and a second negative electrode (not labeled) of a second battery (not labeled) in the battery rod 6 respectively abuts to the first negative electrode 322 and the first positive electrode 321 to form a conductive circuit loop with the first battery 311, then makes the first battery 311 charging the second battery. When pulling out the external battery rod 6 from the battery rod accommodating chamber 36, the circuit loop disconnects, charging the battery rod 6 is stopped. Wherein, the first positive electrode 321 and the first negative electrode 322 may use a spring plate with a certain elastic coefficient to design and make, benefiting to effectively reduce the unrecoverable deformation problem caused when the battery rod 6 inserting into and abutting and compressing the first positive electrode 321 and the first negative electrode 322. Certainly, in specific embodiments, all aforementioned that when the external battery rod 6 inserts into the battery rod accommodating chamber 36, the second positive electrode (not labeled) and the second negative electrode (not labeled) of the second battery (not labeled) in the battery rod 6 respectively abuts to the first negative electrode 322 and the second positive electrode to form a conductive circuit loop with the first battery 311 is not necessarily mean that the first positive electrode 321 and the first negative electrode 322 directly connect to the second positive electrode and the second negative electrode, the first positive electrode 321 and the first negative electrode 322 may indirectly connect to the second positive electrode and the second negative electrode by a connector disposed on the battery rod 6, as long as it is achieved that the first positive electrode 321 and the first negative electrode 322 electrically connects with the second positive electrode and the second negative electrode to form a conductive circuit loop.

Specifically, continue referring to FIG. 2, one end of the battery rod accommodating chamber 36 near to the electrode support 32 further disposes a locking member 33. The locking member 33 is a hollow structure, and the hollow structure can just allow the insertion of the external battery rod 6. After the external battery rod 6 successively inserting into the battery rod accommodating chamber 36 and the hollow structure of the locking member 33, the external battery rod 6 finally is tightened by the locking member 33. Wherein, the locking member 33 may be made of silicone material, using a great friction coefficient of the silicone material to achieve the tightening on the external battery rod 6. In the embodiment, it is not necessary to extra design a control key for the control of charging or not on the second battery in the battery rod 6, it is only needed to insert into or pull out the battery rod, that is, inserting the external battery rod 6 into the battery chamber, and making the second positive electrode and the second negative electrode abut to the first negative electrode 322 and the first positive electrode 321, then the circuit loop is conducted for charging. While when pulling out the external battery rod 6 from the battery chamber, the second positive electrode and the second negative electrode is disconnected from the first negative electrode 322 and the first positive electrode 321 respectively, then the conducted circuit loop is disconnected, and charging is stopped. The operation is simple and quick, no need to design extra key, and can reduce hardware cost.

Preferably, both the first battery 311 and the second battery are rechargeable battery. By using the reusable properties of the rechargeable battery improves serving life of the electronic cigarette case 100 and then saves cost of the electronic cigarette case 100.

Furthermore, continue referring to FIG. 2, the electronic cigarette case 100 includes a printed circuit board 5. The printed circuit board 5 is fixed on the main support 3 by the ways of screwing or clamping. The first battery 311 is loaded in the battery chamber and is fixed on the printed circuit board 5 by the ways of welding or sticking. The printed circuit board 5 disposes a positive terminal (not labeled) and a negative terminal (not labeled) thereon. The battery anode and the battery cathode electrically connect with the positive terminal and the negative terminal respectively, and the positive terminal and the negative terminal electrically connect with the first positive electrode 321 and the first negative electrode 322 respectively. Wherein, a charging interface 51 may be disposed on the printed circuit board 5. An anode and a cathode of the charging interface 51 electrically connect with the negative terminal and the positive terminal respectively. External power supplies power to the first battery 311 by the charging interface 51. Certainly, a transformer circuit is disposed at one side of the charging interface 51 or between the charging interface 51 and the positive terminal and the negative terminal, making external alternating current or direct current to be converted into a more appropriate voltage and then charging the first battery 311. Here will not make too much description.

In addition, continue referring to FIG. 2, the printed circuit board 5 also may be disposed with an output interface 52. An anode and a cathode of the output interface 52 electrically connect with the negative terminal and the positive terminal respectively. The first battery 311 supplies power to external devices by the output interface 52. The external devices may be cell phone, PDA (Personal Digital Assistant), MP3, MP4, flashlight and so on. Taking the first battery 311 as a backup power may further enrich function of the electronic cigarette case 100, and improves the user experience, and solves urgent needs of users in particular case.

In the aforementioned embodiment, both the charging interface 51 and the output interface 52 may be designed as a universal USB interface, making it more compatible and then improves the competitiveness of the product.

In addition, continue referring to FIG. 2, the main support 3 not only includes a battery rod accommodating chamber 36 for accommodating the individual battery rod 6 and charging the battery rod 6 by insertion, but also includes at least one electronic cigarette accommodating chamber 37. The electronic cigarette accommodating chamber 37 is used to accommodate an electronic cigarette 7 after assembly. Certainly, in order to facilitate users to carry more or different taste electronic cigarette 7, the main support 3 may further include at least one atomizer accommodating chamber 38. The atomizer accommodating chamber 38 is used to accommodate an atomizer 8 only. Thus, it is equivalent that a main support 3 may accommodate at least two electronic cigarettes 7 therein. As a complete schematic view shown in FIG. 2, the main support 3 includes an electronic cigarette accommodating chamber 37, a battery rod accommodating chamber 36 and two atomizer accommodating chambers 38. The number and location of the various types of accommodating chamber are designed according to specific needs, and here will not make too much description.

The present invention also provides a support mechanism accommodated in a housing of the electronic cigarette case. The support mechanism may refer to any of the support mechanisms described in the aforementioned embodiments. Here is no longer to repeat again.

Embodiments of the present invention is shown and described in the above-mentioned. Various improvement and modifications can be made to the embodiments by those skilled in the art without departing from the true spirit and scope of the disclosure. The scope of the present invention is defined by the appended claims and equivalents thereof.

## Claims

1. An electronic cigarette case, comprising a case body and a cover body, wherein the cover body is actively connected to the case body, the cover body is capable of opening or closing under an external force, the case body accommodates a support therein; the support includes a main support and an auxiliary support, the main support at least includes a battery chamber, an electrode support and at least one battery rod accommodating chamber, the battery chamber loads a first battery, the electrode support disposes a first positive electrode and a first negative electrode; one end of the first positive electrode and one end of the first negative electrode are electrically connected to a corresponding battery anode and a battery cathode of the first battery respectively, when an external battery rod inserts into the battery rod accommodating chamber, a second positive electrode and a second negative electrode of a second battery in the battery rod are respectively abuts to the first negative electrode and the second positive electrode to form a conductive circuit loop with the first battery, thus makes the first battery charging the second battery.

2. According to the electronic cigarette case in claim 1, wherein one end of the battery rod accommodating chamber near to the electrode support disposes a locking member, the locking member is a hollow structure, the external battery rod successively inserts into the battery rod accommodating chamber and the locking member and is tightened by the locking member.

3. According to the electronic cigarette case in claim 2, wherein the locking member is made of silicone material.

4. According to the electronic cigarette case in claim 1, wherein the first battery is a rechargeable battery.

5. According to the electronic cigarette case in claim 4, wherein the electronic cigarette case comprises a printed circuit board, the printed circuit board is fixed on the main support by screwing or clamping, the first battery is loaded in the battery chamber and is fixed on the printed circuit board by welding or sticking, the printed circuit board disposes a positive terminal and a negative terminal, the battery anode and the battery cathode electrically connect with the positive terminal and the negative terminal respectively; and the positive terminal and the negative terminal electrically connect with the first positive electrode and the first negative electrode respectively.

6. According to the electronic cigarette case in claim 5, wherein the printed circuit board disposes a charging interface thereon, an anode and a cathode of the charging interface electrically connect with the negative terminal and the positive terminal respectively, external power supplies power to the first battery by the charging interface.

7. According to the electronic cigarette case in claim 6, wherein the printed circuit board disposes an output interface thereon, an anode and a cathode of the output interface electrically connect with the negative terminal and the positive terminal respectively, the first battery supplies power to external devices by the output interface.

8. According to the electronic cigarette case in claim 7, wherein both the charging interface and the output interface are USB interface.

9. According to the electronic cigarette case in claim 1, wherein the cover body is rotatably fixed on the case body by a revolving shaft.

10. According to the electronic cigarette case in claim 1, wherein the electronic cigarette case includes a semi-automatic flip mechanism, the semi-automatic flip mechanism comprises a cam, a slider and a damping element, the auxiliary support defines an receiving chamber, both the slider and the damping element are accommodated in the receiving chamber, a fixing end of the cam is rotatably fixed on the main support, and a free end of the cam is latched in the cover body, the slider is connected between the cam and the damping element, the auxiliary support locates at one side of the main support and near to a sidewall in the electronic cigarette case.

11. According to the electronic cigarette case in claim 10, wherein one end of the damping element abuts to a bottom of the slider, and the other end abuts to a bottom wall of the auxiliary support, the fixing end of the cam is rotatably fixed on the main support, and a surface of the slider near the fixed end of the cam disposes a first bump, the fixed end of the cam maintains point contacting with the first bump at any time.

12. According to the electronic cigarette case in claim 11, wherein the cover body is further fixed with a baffle, the baffle is parallel with a sidewall of the cover body and spaced from the sidewall by a certain distance, the free end of the cam extends to inbetween the baffle and the sidewall, and is limited by the baffle and the sidewall respectively; external force exerts on the cover body and drives the cam rotating by the baffle or the sidewall, then drives the slider and the damping element doing linear reciprocating movement in the receiving chamber.

13. According to the electronic cigarette case in claim 11, wherein the first bump is a trapezoidal structure or a semicircular structure.

14. According to the electronic cigarette case in claim 13, wherein the slider and the first bump is integrally formed.

15. According to the electronic cigarette case in claim 10, wherein the damping element is a compression spring.

16. According to the electronic cigarette case in claim 15, wherein the slider has a first guiding rail and a second guiding rail oppositely and in parallel disposed. the first guiding rail and the second guiding rail run through the compression spring; and a bottom of a first end of the slider away from the cam disposes a second bump, on the bottom wall of a bottom of the auxiliary support disposes a third bump, the second bump and the third bump respectively abuts to two ends of the compression spring from a space between the first guiding rail and the second guiding rail, the second bump is used to guide one end of the compression spring to vertically upwards corresponding to the second bump from the third bump of the bottom wall and then arrange the other end of the compression spring.

17. According to the electronic cigarette case in claim 1, wherein the main support further comprises at least one electronic cigarette accommodating chamber.

18. According to the electronic cigarette case in claim 15, wherein the main support further comprises at least one atomizer accommodating chamber.

19. According to the electronic cigarette case in claim 16, wherein the main support further comprises two atomizer accommodating chambers.

20. A support mechanism accommodated in a housing of an electronic cigarette case, wherein the support mechanism includes a main support and an auxiliary support, the main support at least includes a battery chamber, an electrode support and at least a battery accommodating chamber, the battery chamber loads a first battery, the electrode support disposes a first positive electrode and a first negative electrode, one end of the first positive electrode and one end of the first negative electrode respectively corresponding electrically connects to an battery anode and a battery cathode of the first battery, when an external battery rod inserts into the battery rod accommodating chamber, a second positive electrode and a second negative electrode of a second battery in the battery rod respectively abuts to the first negative electrode and the second first positive electrode to form a conductive circuit loop with the first battery, then makes the first battery charging the second battery.

21. According to the support mechanism in claim 20, wherein one end of the battery rod accommodating chamber near to the electrode support disposes a locking member, the locking member is a hollow structure, the external battery rod successively inserts into the battery rod accommodating chamber and the locking member and then is tightened by the locking member, the locking member is made of silicone material.

22. According to the support mechanism in claim 20, wherein the first battery is a rechargeable battery, the electronic cigarette case comprises a printed circuit board, the printed circuit board is fixed on the main support by screwing or clamping, the first battery is loaded in the battery chamber and is fixed on the printed circuit board by welding or sticking, the printed circuit board disposes a positive terminal and a negative terminal, the battery anode and the battery cathode electrically connect with the positive terminal and the negative terminal respectively; and the positive terminal and the negative terminal electrically connect with the first positive electrode and the first negative electrode respectively, the printed circuit board disposes a charging interface, an anode and a cathode of the charging interface electrically connect with the negative terminal and the positive terminal respectively, external power supplies power to the first battery by the charging interface, the printed circuit board disposes an output interface, an anode and a cathode of the output interface electrically connect with the negative terminal and the positive terminal respectively, the first battery supplies power to external devices by the output interface.
